**Europäisches Patentamt**

**European Patent Office**

**Office européen des brevets**

(11) Veröffentlichungsnummer: **0 035 196**
**B1**

(12) **EUROPÄISCHE PATENTSCHRIFT**

(45) Veröffentlichungstag der Patentschrift:
**12.06.85**

(51) Int. Cl.⁴: **C 01 G 23/02, C 22 B 34/12**

(21) Anmeldenummer: **81101247.5**

(22) Anmeldetag: **21.02.81**

(54) **Verfahren zur Herstellung von Titantetrachlorid.**

(30) Priorität: **28.02.80 DE 3007742**

(43) Veröffentlichungstag der Anmeldung:
**09.09.81 Patentblatt 81/36**

(45) Bekanntmachung des Hinweises auf die Patenterteilung:
**12.06.85 Patentblatt 85/24**

(84) Benannte Vertragsstaaten:
**DE FR GB NL**

(56) Entgegenhaltungen:
**EP - A - 0 000 498**
**DE - A - 2 352 428**
**DE - C - 723 223**
**DE - C - 1 045 382**
**US - A - 2 962 353**

(73) Patentinhaber: **DORNIER SYSTEM GmbH,**
**Postfach 1360, D-7990 Friedrichshafen (DE)**

(72) Erfinder: **Schmidberger, Rainer, Dr. Dipl.- Phys.,**
**Reussenbachstrasse 33, D-7778 Markdorf (DE)**
Erfinder: **Kock, Wulf, Dr. Dipl.-Chem.,**
**Azenbergstrasse 7, D-7778 Markdorf (DE)**

(74) Vertreter: **Landsmann, Ralf, Dipl.-Ing., Kleeweg 3,**
**D-7990 Friedrichshafen 1 (DE)**

## Beschreibung

Die Erfindung betrifft ein Verfahren zur Herstellung von Titantetrachlorid aus grobstückigem, vorgereinigtem Titanschrott aus Titan oder Titanlegierungen, der Eisenanteile enthält.

Wegen der hohen Einsatzkosten von Rohtitan sind eine Reihe von Verfahren vorgeschlagen worden, um Titanabfälle einer Wiederverwendung zuzuführen. Das am häufigsten genutzte Verfahren besteht darin, den Schrott mit Rohtitanschwamm zusammenzuschmelzen. Dazu muss der Schrott zuvor zerkleinert und mit Detergentien in der Oberfläche gereinigt werden. Nur mit sehr wenig verunreinigtem Schrott gelangt man auf diese Weise zu einem Werkstoff ausreichender Festigkeit, wie er z.B. in der Flugzeugindustrie gefordert wird. Durch den Schmelzprozess erfolgt keinerlei Raffination, so dass interstitielle Einlagerungen wie C, N und O sowie substitutionelle Verunreinigungen wie Fe aus dem Schrott in die Schmelzen eingeschleppt werden.

Für stärker verunreinigte Titanabfälle ist die Aufarbeitung mit Hilfe der Schmelzflusselektrolyse bekannt. Das Arbeiten mit löslicher Anode führt zu sehr reinem Titan, jedoch bereiten sowohl die Art der Dendritenbildung an der Kathode und deren Handhabung als auch die Ausbildung von Titansubhalogeniden in der Schmelze technische Schwierigkeiten, so dass sich dieses Verfahren nicht auf breiter Linie durchsetzen konnte.

Eine weitere Möglichkeit zur Aufarbeitung von Titanschrott besteht in der Chlorierung, ggf. der reduktiven Chlorierung der Abfälle, wie sie auch zur Herstellung von Titantetrachlorid aus Rutil angewendet wird. Dabei treten Probleme durch das als Verunreinigung enthaltene Eisen auf, dessen Chlorid in der dreiwertigen Stufe die Destillation des Titanchlorids behindert.

Die Abtrennung des Titantetrachlorids von Beimengungen anderer Chloride, die als Verunreinigungen in das Halogenierungsprodukt gelangen, ist prinzipiell durch fraktionierte Destillation möglich. Störungen treten jedoch auf, wenn die Verunreinigungen unter Auslassung des flüssigen Aggregatzustandes in die Destillationskolonne sublimieren und dort sich als fester Belag niederschlagen. Besonders, wenn das Sublimat sich im flüssigen Titantetrachlorid nicht löst, werden die Füllkörper nicht freigewaschen und die Kolonne verstopft sehr schnell. Dieser Fall tritt z.B. beim Vorliegen von Eisen(III)-Chlorid auf.

Der Erfindung liegt die Aufgabe zugrunde, für die Rückgewinnung von Titan aus Titanschrott ein Chlorierungsverfahren anzugeben, bei dem die Abscheidung des im Kühler festhaftenden Eisen-(III)-Chlorids unterbunden wird.

Die Lösung dieser Aufgabe ist im Patentanspruch angegeben.

Erfindungsgemäss wird die Aufgabe dadurch gelöst, dass die Schrotteile in einem Reaktor bei ca. 600°C bei einem durch ein vorgeschaltetes Gasgleichgewicht eingestellten Chlorpartialdruck halogeniert werden, wobei das Partialdruckverhältnis des vorgeschalteten Gasgleichgewichts, vorzugsweise das Partialdruckverhältnis von Chlorwasserstoff und Wasserstoff so eingestellt wird, dass das Eisen zum Eisen(II)-Chlorid und die Legierungsmetalle zu nichtflüchtigen Metallchloriden chloriert werden und ein aus Titantetrachlorid, Chlorwasserstoff und Wasserstoff zusammengesetztes Gasgemisch entsteht, das in einem Kühler auf eine Temperatur unterhalb 130 °C herabgekühlt wird, wobei das Titantetrachlorid in die flüssige Phase übergeht und abgetrennt wird und überschüssiger Wasserstoff und Chlorwasserstoff dem Prozess erneut zugeführt werden, während das Eisen(II)-Chlorid in fester Form im Reaktor zurückbleibt.

Die Beimengungen des Titans werden von vornherein in solchen Oxidationsstufen halogeniert, in denen sie entweder destillativ ohne grosse Schwierigkeiten abgetrennt werden können, oder in denen sie bei den Verfahrenstemperaturen einen vernachlässigbar kleinen Dampfdruck haben. Eine technische Ausführung der formulierten Lösung besteht darin, dass die Oxidationsstufen, in denen die Begleitmetalle des Titans hauptsächlich halogeniert werden, durch geeignete Wahl der Reaktionsparameter Druck, Temperatur und Zusammensetzung eingestellt werden.

Ausserdem können gleichzeitig mit Hilfe dieser drei Parameter die relativen Mengen der Reaktionsprodukte in gewünschter Weise beeinflusst werden. Dabei legt ein Satz dieser drei Parameter die relativen Mengen aller an der Reaktion beteiligten Stoffe fest. Will man hingegen nur die relativen Mengen einiger Reaktanden auf einen vorgegebenen Wertebereich einengen, kann diese Aufgabe durch eine Fülle von Wertetripeln der drei Parameter erfüllt werden. Für den konkreten Fall der Titantetrachlorid-Destillation heisst dies, dass der Wertebereich, aus dem man die Halogenierungsparameter wählen kann, umso grösser wird,

- je geringer die Zahl der Reaktanden ist, deren relative Mengen man festlegt und
- je grösser der Wertebereich ausfällt, den man für die relativen Mengen der Reaktanden festlegt.

Damit ist ersichtlich, dass man Wertebereiche für die Halogenierungsparameter des Titanschrotts nicht in absoluten Zahlen angeben kann, sondern als formelmässigen Zusammenhang zwischen den Prozessparametern und den Randbedingungen, die man an die Halogenierungsprodukte stellt.

Dieser formelmässige Zusammenhang soll im folgenden angegeben und erläutert werden.

Für die Reaktion eines festen Metallchlorides $MeCl_x$ zum höher halogenierten flüchtigen Chlorid $MeCl_{x+1}$ kann man formulieren:

$$MeCl_x^{(f)} + \frac{1}{2}Cl_2 = MeCl_{x+1}^{(g)} \tag{1}$$

Die zugehörige Gleichung des Massenwirkungsgesetzes lautet

$$K_p = \frac{p_{MeCl_{x+1}}}{a_{MeCl_x} \cdot \sqrt{p_{Cl_2}}} \tag{2}$$

Die Aktivität des festen Chlorides $MeCl_x$ ist definitionsgemäss gleich 1, so dass der Partialdruck der flüchtigen Verbindung $MeCl_{x+1}$ nur festgelegt ist durch den Partialdruck des Chlors und die Konstante Kp. Kp ist praktisch nur Funktion der Temperatur und kann den üblichen einschlägigen Tabellenwerken entnommen werden (z.B. I. Barin und O. Knacke, Thermochemical properties of inorganic substances, Springer Verlag, Berlin 1973). Der Chlorpartialdruck wird erfindungsgemäss nicht durch Eindosieren von elementarem Chlor eingestellt, sondern durch ein vorgeschaltetes Gasgleichgewicht, beispielsweise das der Chlorknallgasreaktion:

$$H_2 + Cl_2 \leftrightarrows 2HCl \qquad (3)$$

Damit lassen sich technisch überhaupt nur die erforderlichen äusserst geringen Chlorpartialdrucke einstellen, die das Gleichgewicht der Reaktion (1) hinreichend weit auf die linke Seite verschieben. Ausserdem bleibt trotz des geringen Chlorpartialdruckes eine hinreichend grosse Anzahl an Chloratomen im Reaktor erhalten, so dass die Geschwindigkeit der Chlorierungsreaktion nicht auf einen unvertretbar kleinen Betrag gesenkt wird.

Der durch die Reaktion (3) eingestellte Chlorpartialdruck gehorcht natürlich auch dem Massenwirkungsgesetz

$$p_{Cl_2} = \frac{p^2_{HCl}}{K_P \cdot p_{H_2}} \qquad (4)$$

Gleichung (4) zeigt, dass $p_{Cl_2}$ im Prinzip durch 3 Parameter beeinflusst werden kann, nämlich durch die Partialdrucke sowohl des Wasserstoffs wie auch des Chlorwasserstoffs und durch die Temperaturabhängigkeit der Konstante Kp. Die Verknüpfung der Gleichungen (4) und (2) zeigt endlich, dass der Partialdruck des flüchtigen Chlorids $MeCl_{x+1}$ durch dieselben 3 Parameter festgelegt wird, die in Gleichung (4) enthalten sind.

Die Gleichung (2) ist – mit individueller Konstante Kp – für jedes Metall anzuwenden, das im Titanschrott enthalten ist. Dabei ist zu beachten, dass in allen Fällen der Chlorpartialdruck durch eine Reaktion nach Gleichung (4) auf demselben Wert gehalten wird.

Im Gegensatz zum Stand der Technik, wie er beispielsweise aus DE-C-723 223 bekannt ist, in der ein Verfahren zur Nachreinigung der Halogenierungsprodukte angegeben wird, vermeidet das hier beschriebene Verfahren bereits im Chlorierungsschritt das Entstehen störender Mengen an Fremdchloriden. Dabei stellt das Gaspaar $H_2$/HCl das Instrument dar, dessen nachfolgend beschriebener gezielter und kontrollierter Einsatz gestattet, reproduzierbar den Gehalt an Verunreinigung auf ein vorgewähltes Mass zu senken. Dies erlaubt gleichzeitig, die in der DE-C-723 223 erwähnten Titanverluste zu vermeiden, die bei dem dort beschriebenen Verfahren unumgänglich sind und deren Ausmass unter anderem von der Art und Menge der vorhandenen Verunreinigungen abhängt.

Die Erfindung wird nachfolgend anhand von drei Diagrammen und einer Figur näher erläutert.

Im Diagramm 1 ist derjenige nach der oben angeführten Gleichung (2) berechnete Chlorpartialdruck als Funktion der reziproken Temperatur aufgetragen, bei dem der Dampfdruck des flüchtigen Chlorides $MeCl_{x+1}$ im Kontakt mit dem nichtflüchtigen niederen Chlorid $MeCl_x$ gerade 0,1 mbar beträgt. Die Verhältnisse bei beliebigen anderen Dampfdrucken des flüchtigen Chlorides werden gemäss Gleichung (2) aus dem Diagramm abgelesen, indem man berücksichtigt, dass jeweils eine Verdoppelung von $p_{MeCl_{x+1}}$ eine Vervierfachung von $p_{Cl_2}$ bewirkt.

Im Falle des $TiCl_4$ würde die Forderung nach einem Partialdruck grösser 0,1 bar die eingezeichnete Linie nach oben zu höheren Chlorpartialdrucken verschieben. Im Falle der abzutrennenden Chloride des Eisens sowie des Legierungsmetalls Vanadin bewirkt entsprechend die Forderung nach kleineren als den angegebenen Partialdrucken eine Verschiebung der Koexistenzlinie nach unten in Richtung auf kleinere Chlorpartialdrucke.

Für die erfindungsgemässe Lösung der Aufgabe, selektiv nur das Titan zu einer gasförmigen Verbindung zu chlorieren, sind alle Wertepaare für Temperatur und Chlorpartialdruck geeignet, die oberhalb der Koexistenzlinie des Titantetrachlorids und unterhalb der Koexistenzlinien aller aus dem Schrott bildbaren flüchtigen Metallchloride liegt. Das verfügbare Arbeitsfeld hängt also laut Gleichung (2), wie sie exemplarisch im Diagramm 1 für die dort bezeichneten Sonderfälle anschaulich gemacht ist, von der Art der im Schrott vorhandenen Legierungsbestandteile sowie von der Art der Verunreinigungen ab und ist ausserdem bestimmt durch die Anforderungen an die Partialdrucke der Chlorierungsprodukte.

Wie bereits erwähnt, sind Chlorpartialdrucke von $10^{-10}$ bis $10^{-20}$ bar, wie sie aus Diagramm 1 entnommen werden, nicht durch Eindosieren von Chlorgas realisierbar. Ausserdem würde eine derart geringe Teilchendichte die Reaktionsgeschwindigkeit für den Chlorierungsprozess praktisch zu Null machen. Erfindungsgemäss werden diese beiden Schwierigkeiten dadurch umgangen, dass man durch ein vorgeschaltetes Gasgleichgewicht, z.B. die Chlorknallgasreaktion der Gleichung (3), einerseits die geringen erforderlichen Chlorpartialdrucke einstellt, andererseits wegen der Umkehrbarkeit dieser Reaktion neben einer sehr geringen aktuellen Chlorkonzentration eine um viele Zehnerpotenzen höhere potentielle Chlorkonzentration aufrecht hält.

In Diagramm 2 ist der Zusammenhang der Gleichung (4) deutlich gemacht. Für 3 verschiedene Chlorpartialdrucke, wie sie typischerweise aus Diagramm 1 entnommen werden, ist auf einer logarithmischen Skala die Zusammensetzung der Reduktionsatmosphäre als Funktion der reziproken Temperatur aufgetragen. Hat man sich anhand von Diagramm 1 für einen Arbeitspunkt bezüglich Temperatur und Chlorpartialdruck entschieden, kann aus Diagramm 2 die zugehörige $H_2$/HCl Atmosphäre ermittelt werden.

Obwohl mit den Gleichungen (2) und (4) die der selektiven Halogenierung zugrunde liegenden Gesetzmässigkeiten in elementarster Weise ausgedrückt sind, lassen sich daraus die Betriebsparameter nur mühsam gewinnen. Deshalb soll im folgenden deren funktionaler Zusammenhang in einem geschlossenen Ausdruck angegeben werden.

Als Vorgabe seien gegeben

— das Verhältnis $A = \dfrac{p_{HCl}}{p_{H_2}}$

— der Gesamtdruck p° in bar.

Der Titanpartialdruck errechnet sich zu

$$p_{TiCl_4} = - F + \sqrt{F^2 + 2\,F\,p^\circ} \qquad (5)$$

$$\text{mit } F = K \frac{A^2}{1 + A} \qquad (6)$$

Der Faktor K ist für Temperaturen von 500 K bis 1100 K in Tabelle 1 aufgeführt. Die Auswahl der Prozesstemperatur bestimmt sich nach den Reinheitsanforderungen an das $TiCl_4$. Der Gehalt des $TiCl_4$ an flüchtigem Metallchlorid als Funktion der Temperatur ist im Diagramm 3 für Eisen(III)-Chlorid sowie für Vanadin(IV)-Chlorid aufgetragen. Die Angaben gelten nur für den Zustand, dass man erfindungsgemäss durch die geeignete Wahl der Reaktionsatmosphäre die flüchtigen Chloride ins Gleichgewicht mit ihren nichtflüchtigen niederen Homologen setzt.

Wählt man die Prozesstemperatur frei, so ist der Gehalt an Verunreinigung festgelegt, legt man die Menge an Verunreinigung fest, ist damit die Temperatur — und damit die Konstante K — bestimmt. Der Zusammenhang kann mathematisch in der Form

$$K = XB^Y \qquad (7)$$

ausgedrückt werden, wobei

$$B = \frac{p_{MeCl_{x+1}}}{p_{TiCl_4}} \qquad (8)$$

X und Y sind Stoffkonstanten, die sich aus den Reaktionsenthalpien und -entropien der Reaktionen (1) und (3) errechnen. Die Zahlenwerte sind für die Begleitelemente Eisen und Vanadin in Tabelle 2 angegeben.

Bei vorgegebenem Partialdruckverhältnis A, vorgegebenem Gesamtdruck p° und vorgegebenem Verunreinigungsgrad B errechnet sich aus der Kombination der Gleichungen (5) bis (7) der Titantetrachloridpartialdruck zu

$$p_{TiCl_4} = - XB^Y \frac{A^2}{1+A} + \sqrt{X^2 B^{2Y} \frac{A^4}{(1+A)^2} + 2\,XB^Y \frac{A^2}{1+A}\,p^\circ} \qquad (9)$$

Andererseits ergibt sich bei vorgegebenem A, p° und $p_{TiCl_4}$ der Verunreinigungsgrad B zu

$$B = \left[ \frac{p_{TiCl_4}^2 (1+A)}{2(p^\circ - p_{TiCl_4}) \cdot X \cdot A^2} \right]^{1/Y} \qquad (10)$$

Ausserdem gilt bei vorgegebenem p°, $p_{TiCl_4}$ und B

$$A = \frac{p_{TiCl_4}^2}{4XB^Y (p^\circ - p_{TiCl_4})} \left[ 1 + \sqrt{1 + \frac{8XB^Y (p^\circ - p_{TiCl_4})}{p_{TiCl_4}^2}} \right] \qquad (11)$$

Die Gleichungen (9) bis (11) können wechselseitig ineinander umgerechnet werden.

Bei der Vorgabe einer Prozesstemperatur anstelle von B wird aus Gleichung (11)

$$A = \frac{2{,}22 \cdot 10^{-9} p_{TiCl_4}^2 \exp\left(\frac{10680}{T}\right)}{p^\circ - p_{TiCl_4}} \left[ 1 + \sqrt{1 + \frac{9{,}01 \cdot 10^8 (p^\circ - p_{TiCl_4})}{p_{TiCl_4}^2 \exp\left(\frac{10680}{T}\right)}} \right] \qquad (12)$$

Mit Hilfe der Gleichungen (9) bis (12) können die Prozessparameter für die selektive Chlorierung des Titans zum flüchtigen Tetrachlorid ermittelt werden als Funktion der gewünschten Vorgabewerte Temperatur, Gesamtdruck, Produktreinheit, Produktdruck und Zusammensetzung der Halogenierungsatmosphäre.

Tabelle 1

| $\dfrac{T}{K}$ | $\dfrac{K}{\text{bar}}$ |
|---|---|
| 500 | $5{,}89 \cdot 10^{-2}$ |
| 600 | $2{,}07$ |
| 700 | $26{,}39$ |
| 800 | $177{,}8$ |
| 900 | $784{,}2$ |
| 1000 | $2{,}57 \cdot 10^{3}$ |
| 1100 | $6{,}79 \cdot 10^{3}$ |

Tabelle 2

| Element | $\dfrac{X}{\text{bar}}$ | Y |
|---|---|---|
| Fe | $6{,}32 \cdot 10^{14}$ | $1{,}74$ |
| V | $5{,}65 \cdot 10^{8}$ | $1{,}13$ |

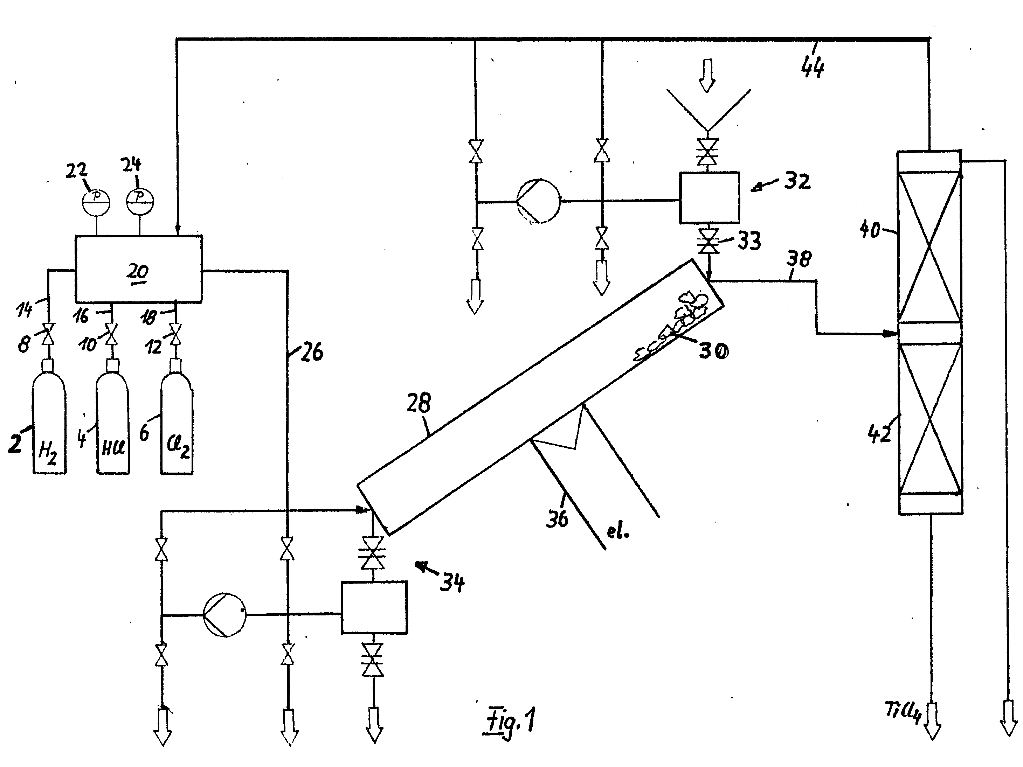

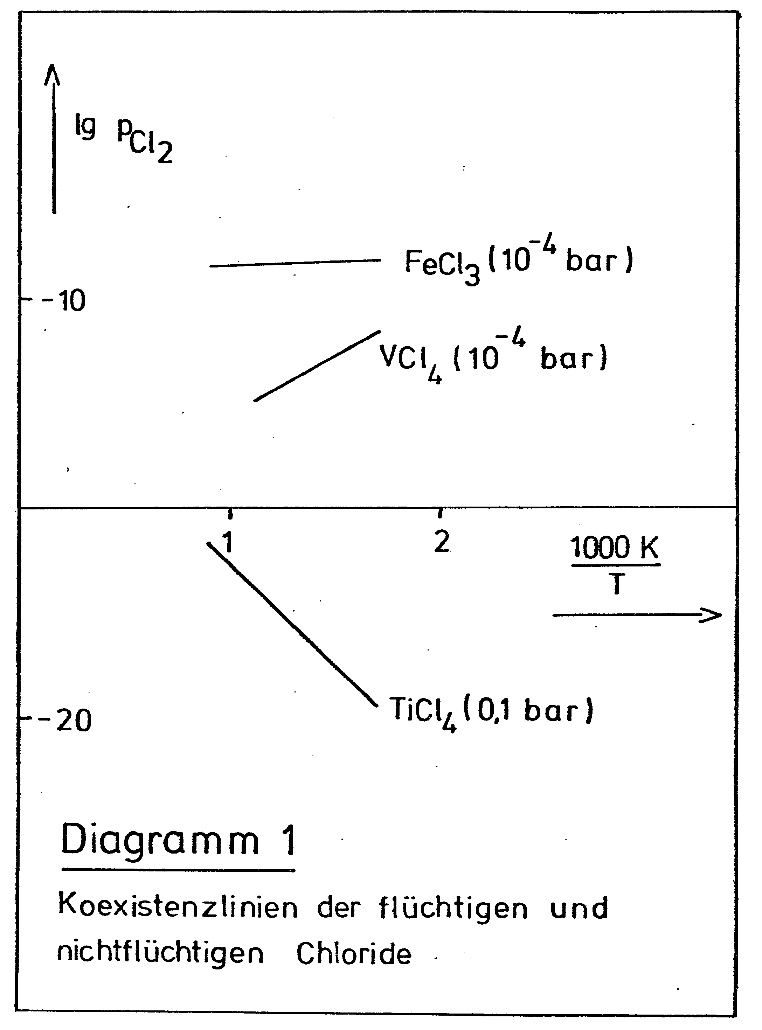

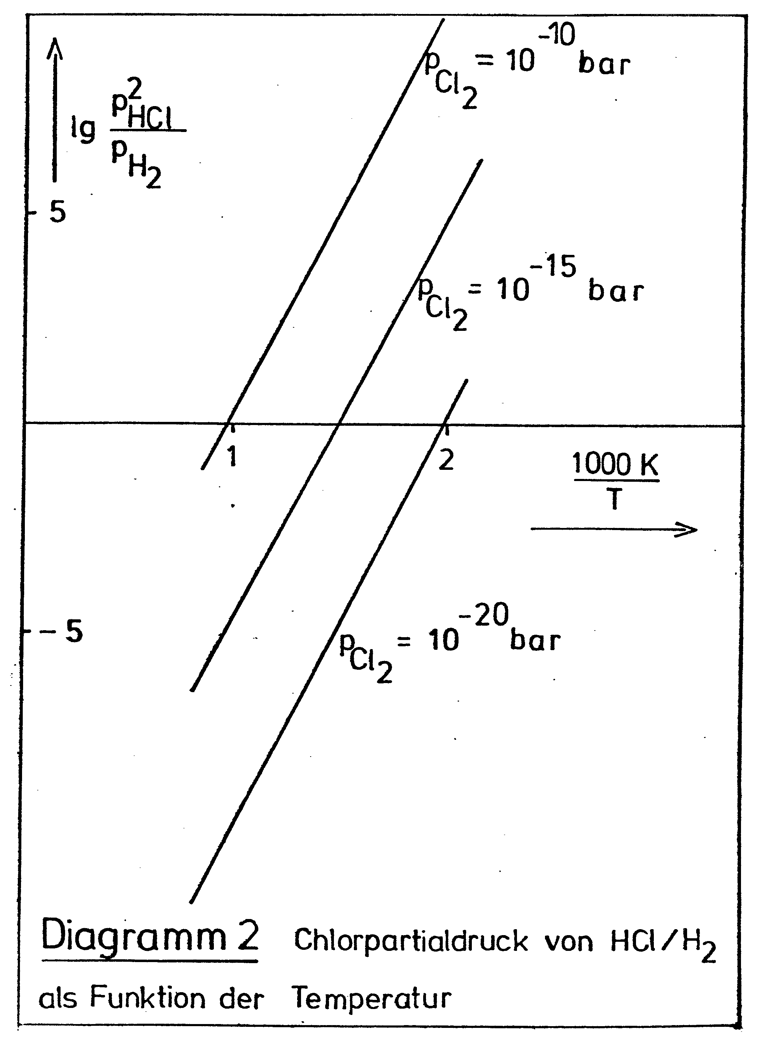

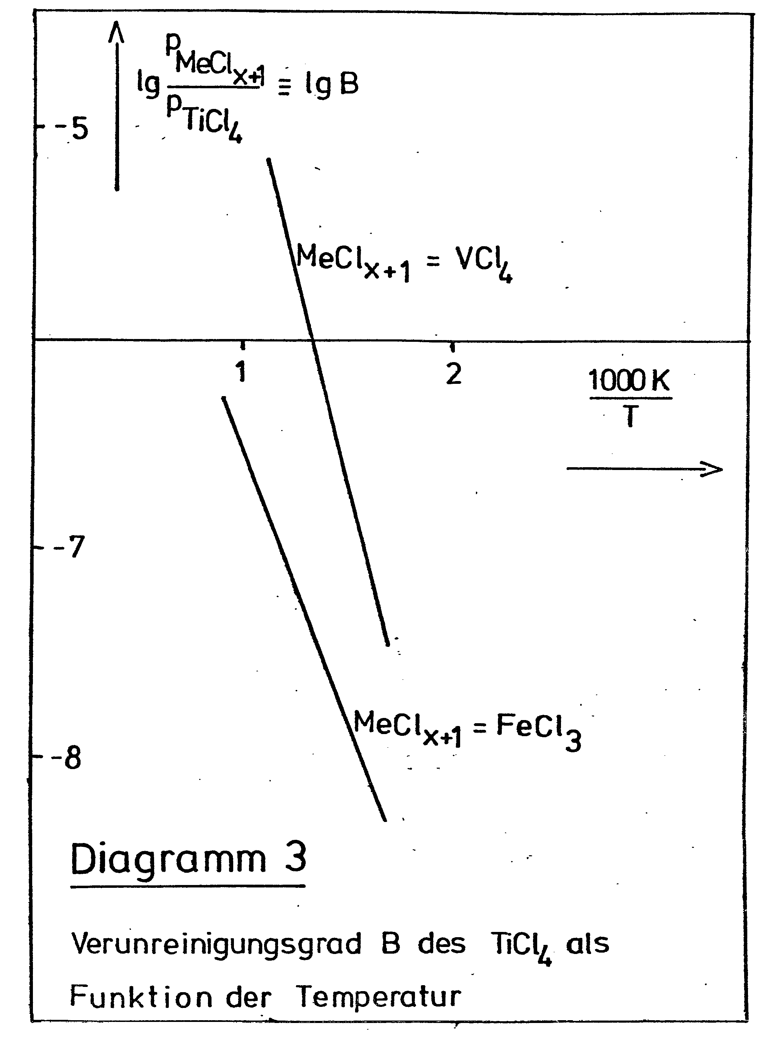

Die Fig. 1 zeigt in prinzipieller Darstellung den Aufbau einer Anlage zur Durchführung des erfindungsgemässen Verfahrens. Die im linken Teil der Figur angeordneten Gasflaschen 2, 4, 6 enthalten $H_2$, HCl und Chlor. Über Ventile 8, 10, 12 gelangen geregelte Gasströme mittels der Leitungen 14, 16, 18 zu einer Vorkammer 20, die mit Partialdruckmessgeräten 22, 24 in Verbindung steht. Die Vorkammer gewährleistet, dass das aus Gasflasche 6 eingeleitete Chlor sich vollständig mit dem im Überschuss vorhandenen Wasserstoff zu Chlorwasserstoff umsetzt. Aus der Vorkammer 20 gelangt ein Gasgemisch aus $H_2$ und HCl mittels der Leitung 26 zu einem Reaktor 28, in dem sich Titanschrott 30 befindet, der über eine Füllanlage 32 eingefüllt wird. Die beim Verfahren in fester Form anfallenden Reaktionsprodukte werden vom Reaktor 28 mittels einer Entnahmeeinrichtung 34 entfernt. Der Reaktor 28 ist mittels einer Heizeinrichtung 36 heizbar. Die beim Verfahren gasförmig anfallenden Reaktionsprodukte werden über Leitung 38 einer Destillationskolonne zugeführt, die aus zwei Kühlern 40, 42 besteht. Die in der Destillationskolonne nicht kondensierten gasförmigen Produkte HCl und $H_2$ werden über Leitung 44 erneut der Vorkammer 20 zugeführt, während flüssiges Titantetrachlorid entnommen wird und zu einem Weiterverarbeiter gelangt.

Zentrales Organ zur Durchführung des Verfahrens ist der Reaktor 28, in dem die Reaktionspartner auf 600–700 °C gebracht werden können. An seinem oberen Ende hat er eine Befülleinrichtung 32, z.B. eine evakuierbare Schleuse 33, mit der Titanschrott in die Reaktionszone gebracht werden kann. Es ist Sorge zu tragen, dass kein atmosphärischer Sauerstoff in den Reaktor gelangt. Am unteren Ende des Reaktors befindet sich eine analog aufgebaute Vorrichtung 34 zum Entfernen der festen Reaktionsprodukte.

Die Chlorierungsatmosphäre wird in der Vorkammer 20 gemischt und eingestellt. Sie gelangt unten in den Reaktor und strömt dem Schrott 30 entgegen. Am oberen Ende des Reaktors wird die Reaktoratmosphäre zusammen mit den entstandenen gasförmigen Halogenierungsprodukten (vorzugsweise $TiCl_4$) abgezogen und der Destillationskolonne 42, 44 zugeführt. Im Kopfkühler 42 werden $TiCl_4$ und die Halogenierungsatmosphäre getrennt. Die gasförmigen Produkte werden der Vorkammer 20 zugeführt und gehen erneut in den Kreislauf ein.

Beispiel

Über eine Eisen-Titan-Legierung wird bei 610 °C ein Gemisch aus 50% Wasserstoff und 50 Chlorwasserstoff geleitet. Der Gasstrom beträgt 100 cm³/min. Aus dem Produktestrom kondensiert bei Raumtemperatur Titantetrachlorid ($TiCl_4$). Das Eisen wird vollständig als Eisen(II)-Chlorid in der Chlorierungszone zurückgehalten.

**Patentanspruch**

Verfahren zur Herstellung von Titantetrachlorid aus grobstückigem, vorgereinigtem Titanschrott aus Titan oder Titanlegierungen, der Eisenanteile enthält, dadurch gekennzeichnet, dass die Schrotteile in einem Reaktor (28) bei ca. 600 °C bei einem durch ein vorgeschaltetes Gasgleichgewicht eingestellten Chlorpartialdruck halogeniert werden, wobei das Partialdruckverhältnis des vorgeschalteten Gasgleichgewichts, vorzugsweise das Partialdruckverhältnis (A) von Chlorwasserstoff (HCl) und Wasserstoff ($H_2$), so eingestellt wird, dass das Eisen zum Eisen(II)-Chlorid und die Legierungsmetalle zu nichtflüchtigen Metallchloriden chloriert werden und ein aus Titantetrachlorid ($TiCl_4$), Chlorwasserstoff (HCl) und Wasserstoff ($H_2$) zusammengesetztes Gasgemisch entsteht, das in einem Kühler (40, 42) auf eine Temperatur unterhalb 130 °C herabgekühlt wird, wobei das Titantetrachlorid in die flüssige Phase übergeht und abgetrennt wird und überschüssiger Wasserstoff und Chlorwasserstoff dem Prozess erneut zugeführt werden, während das Eisen(II)-Chlorid in fester Form im Reaktor zurückbleibt.

**Claim**

Method of making titanium tetrachloride from coarse, pre-purified titanium scrap consisting of titanium or titanium alloy, *containing iron, characterized thereby that pieces of scrap are halogenized in a reactor (28) at about 600 °C, by a chlorine partial pressure which is fixed by a superposed gas balance, the partial pressure relation of the superposed gas balance, preferably the partial pressure relation (A) of hydrochloric acid (HCl) and hydrogen ($H_2$), being adjusted to a value at which the iron is chlorinated to iron (II)-chloride and the alloy metals to nonvolatile metal chlorids and a gas mixture composed of titanium tetrachloride ($TiCl_4$) hydrochloric acid (HCl) and hydrogen ($H_2$) is generated which is cooled down to a temperature below 130 °C, in a cooler (40, 42) where the titanium tetrachloride changes into the liquid phase and is separated and excess hydrogen and hydrochloric acid are again supplied into the process while the iron (II)-chloride remains in the solid state in the reactor.

## Revendications

Procédé de préparation de tétrachlorure de titane à partir de déchets de titane en gros morceaux, préalablement nettoyés, constitués par du titane ou des alliages de titane, et qui contiennent du fer, caractérisé par le fait que les fragments de déchets sont halogènes dans un réacteur (28) à environ 600°C sous une pression partielle du chlore réglée par un équilibre gazeux préalable, le rapport entre pressions partielles de l'équilibre gazeux préalable, et de préférence le rapport (A) entre pressions partielles du gaz chlorhydrique (HCl) et de l'hydrogène (H$_2$), étant réglé de manière que le fer soit chloré en chlorure ferreux et les métaux d'alliage en chlorures métalliques non volatils et que l'on obtienne un mélange gazeux constitué par du tétrachlorure de titane (TiCl$_4$), du gaz chlorhydrique (HCl) et l'hydrogène (H$_2$), qui est refroidi dans un condenseur (40, 42) à une température inférieure à 130°C, le tétrachlorure de titane passant alors en phase liquide et étant séparé, et l'hydrogène et le gaz chlorhydrique en excès étant renvoyés dans le procédé, alors que le chlorure ferreux reste dans le réacteur sous forme solide.

Fig.1

0 035 196

**Diagramm 1**

Koexistenzlinien der flüchtigen und nichtflüchtigen Chloride

**Diagramm 2**  Chlorpartialdruck von HCl/$H_2$

als Funktion der Temperatur

$$lg\,\frac{p_{MeCl_{x+1}}}{p_{TiCl_4}} \equiv lg\,B$$

$MeCl_{x+1} = VCl_4$

$MeCl_{x+1} = FeCl_3$

$\dfrac{1000\,K}{T}$

## Diagramm 3

Verunreinigungsgrad B des $TiCl_4$ als

Funktion der Temperatur